# EUROPEAN PATENT APPLICATION

(11) **EP 3 669 694 A1**
(43) Date of publication of application: **24.06.2020**
(21) Application number: 18214816.3
(22) Date of filing: 20.12.2018
(51) Int. Cl.: A45C 5/14, B60B 33/00

(54) **TROLLEY CASE**

(71) Applicant: STAR-TAGS Textilimport- und Merchandising GmbH, 80797 München (DE)
(72) Inventor: Georgi, Bernd, 82031 Grünwald (DE)
(74) Representative: Banse & Steglich Patentanwälte PartmbB

(57) **Abstract**

The invention relates to a trolley case (1) with a bottom plane at which a plurality of wheel suspensions (10) are mounted, wherein each wheel suspension comprises:
- a wheel holder (11) substantially perpendicularly protruding from the bottom plane;
- one or two wheel shafts (12) protruding from a distal end of the wheel holder (11) perpendicular with respect to the protrusion of the wheel holder (11),
wherein at least one wheel (13) is mounted on each wheel shaft (12) in a replacable manner.

## Description

### Technical field

The present invention relates to suitcases, and more particularly to trolley cases.

### Technical background

Trolleys are well known in the art. They are known as a kind of luggage case having wheels to facilitate transportation of the luggage over short distances such as at airports, train stations and the like.

Due to the rough environments in which trolleys are used, the wheels are exposed to severe load conditions as they experience impacts due to uneven pathways, stones, dirt and overload so that they are exposed to wear and thus durability against damage is decreased. It can be shown that the main cause for damaged trolleys is related with the wheels. Therefore, since trolleys are not practically usable without functioning wheels, many trolleys are thrown away although the luggage case itself is still functionable.

Approaches to increase sustainability of wheels have been made that were able to increase durability, while damages of the wheels still remain the main cause for making the trolley useless.

It is therefore an object of the present invention to provide an improved trolley with a substantially increased lifetime.

### Summary of the invention

This object has been achieved by the trolley according to claim 1.

Further embodiments are indicated in the depending subclaims.

According to a first aspect, a trolley case with a bottom plane at which a plurality of wheel suspensions are mounted, wherein each wheel suspension comprises:
- a wheel holder protruding from the bottom plane, particularly in a substantially perpendicular direction;
- one or two wheel shafts protruding from a distal end of the wheel holder perpendicular with respect to the protrusion of the wheel holder,
wherein a wheel is mounted on each wheel shaft in a replacable manner.

One idea of the above trolley is to use a wheel arrangement with replaceable wheels so that in case of a breakdown of a trolley due to wear or breakage of the wheels or damages on the bearing of the wheels the wheel can be easily replaced by the user of the trolley.

Particularly, providing the wheels with a hub opening which may be integrally provided with a bearing or which can be provided with one or more separate bearings to be attached to a protruding horizontal shaft allows the use of standard wheels and allows a facilitated replacement. As wheels any standard rolls for skates or skateboards can be applied. Once attached to the shaft, the wheel is secured by securing means on the protruding end of the shaft.

The standard wheels are available in different colors so that customizing the trolley for each user is easy to manage. This allows a user to better identify the trolley particularly at luggage belts on airports and the like.

Moreover, a securing means, particularly a securing screw, may be provided to fixate the wheel onto the wheel shaft in a releasable manner.

Furthermore, a protruding end of each of the one or two wheel shafts may be provided with a thread to engage with a securing screw so that the wheel is secured onto the respective wheel shaft.

It may be provided that each wheel is rotatably hold onto the respective wheel shaft by means of a bearing.

Particularly, the bearing may be integrally formed with the wheel.

Moreover, the wheels may be made of rubber, plastics or metal. Particularly, the wheels may be made of polyurethane which is soft so that noise by rolling on uneven surfaces can be reduced.

It may be provided that the wheel holder is configured to rotate around a protrusions axle perpendicular to the bottom plane.

According to an embodiment, a compartment may be provided in the interior of an encompassed chamber in which a spare wheel is accommodated, where the spare wheel is appropriate in shape and size to be attached to the one or two wheel shafts.

### Brief description for drawings

Embodiments of the present invention are described in more detail in conjunction with the accompanying drawings, in which:
- Fig. 1: shows a perspective view on an embodiment of a trolley;
- Fig. 2: shows a side view onto a wheel suspension across an axial direction of the wheel shaft;
- Fig. 3: shows a side view onto the wheel suspension in an axial direction of the wheel shaft;
- Fig. 4: shows a perspective view onto the wheel suspension; and
- Fig. 5: shows an explosion view onto the wheel suspension illustrating the process of replacement of one wheel.

### Detailed description of embodiments

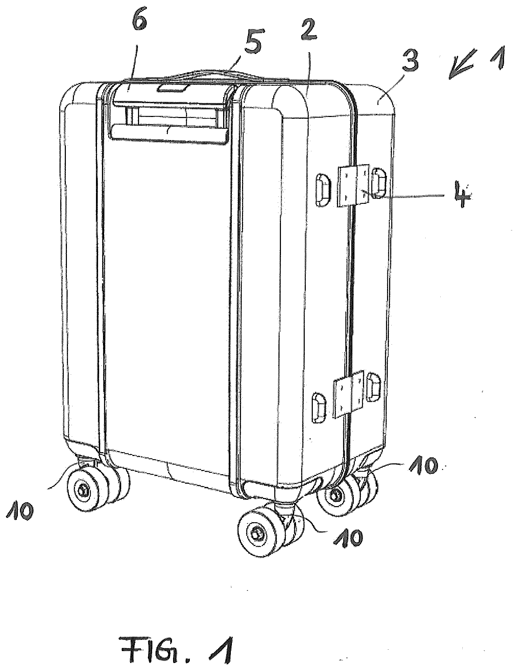

As shown in Figure 1, a trolley case 1 provides an upper cover 2 and a lower cover 3 each of which has a cupped shape. One or more hinges 4 are applied on one side of each cover 2, 3 to connect the covers 2, 3 so that an interior of an encompassed chamber is closed when the covers 2, 3 are moved onto each other and opened when the covers 2, 3 are moved away from each other. The covers 2, 3 can be opened and closed/ locked to keep contained luggage, such as clothing and the like, safely stored in the interior of the encompassed chamber.

The upper cover 2 and lower cover 3 may be made of plastics materials, metal such as aluminum or the like which will provide a robust protection of the luggage contained in the interior. The covers 2,3 may be structured with strengthening ribs or the like which reduce deformation in case of load onto the cover from inside or from outside.

The upper cover 2 or the lower cover 3 may be provided with a handle 5 to carry the trolley and may be provided with a retractable lever 6 which is integrated into the lower cover 2. The lever 6 can be extended to facilitate moving the trolley case 1. When the trolley shall be stored, the lever 6 can be retracted and thus hidden in the lower cover 2, as it is well known in the art.

As Figure 1 only shows an example of a trolley case 1, however, any other sizes and shapes of trolley cases 1 with differently shaped covers 2, 3, handles 5 and levers 6 can be applied.

Essentially, the trolley case 1 is provided with four wheel suspensions 10 attached close to the corners of a bottom plane of the trolley case 1. The bottom plane can be formed by one of the covers 2,3, or by both covers 2, 3 when the interior is closed.

Each wheel suspension 10 is rotatably mounted on the trolley case 1 around a vertical axle substantially perpendicular to the common bottom plane so that rolling movement of the trolley case 1 on a ground surface in different directions is enabled. Each wheel suspension 10 is configured to hold one or more wheels 13.

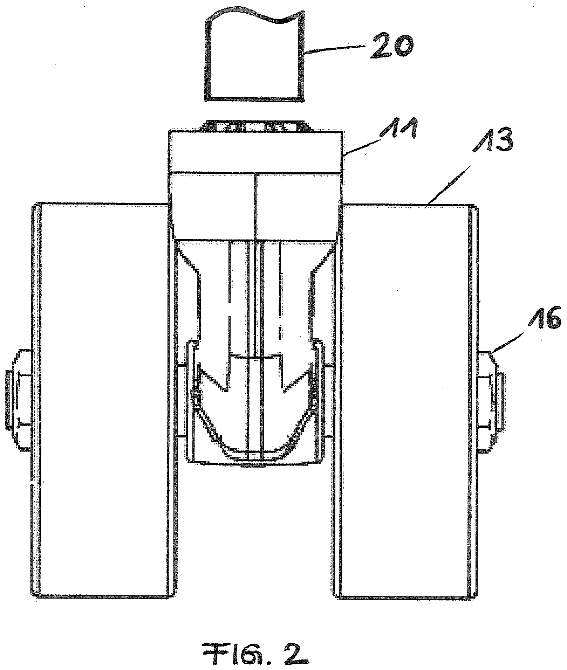

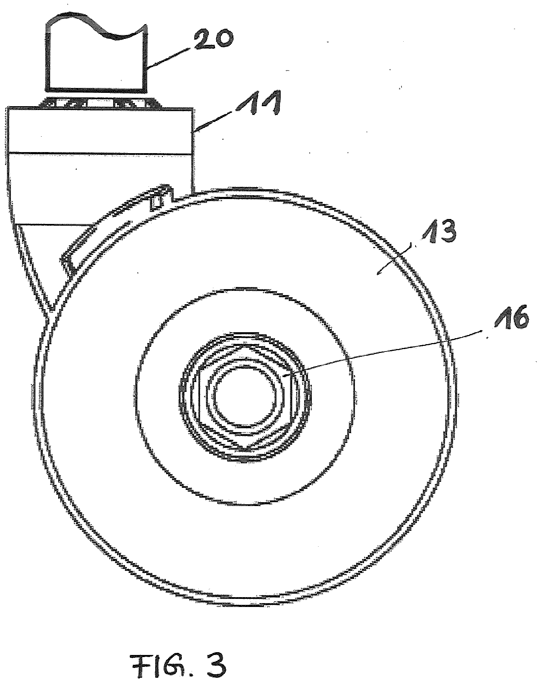

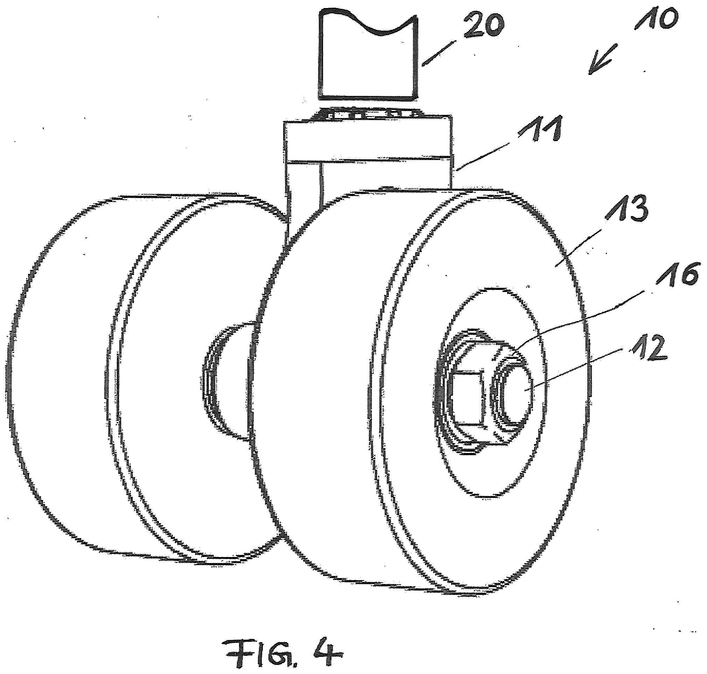

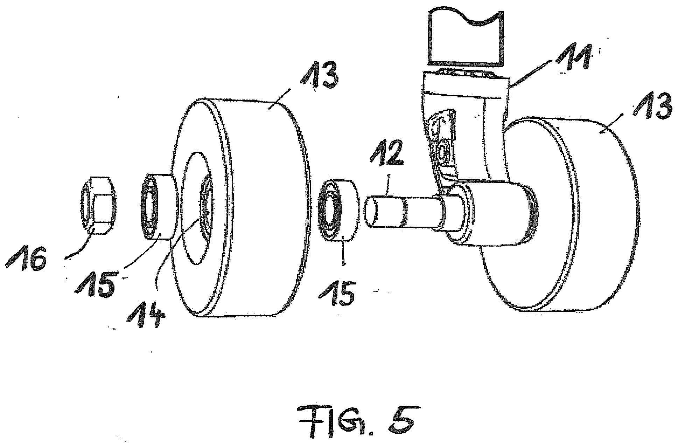

Figures 2 to 5 show different views on the wheel suspension 10 as used for the trolley case 1. The wheel suspension 10 has a wheel holder 11 which can be rotatably attached to the trolley case 1 by means of a suspension shaft 20 protruding from the trolley case 1 downward.

The wheel holder 11 may be configured e.g. with an axial recess to accommodate the suspension shaft 20 or to engage therewith. Substantially, the wheel suspension 10 protrudes from the trolley case 1. The suspension shaft 20 may be mounted on the one of the covers 2, 3 so that it is rigidly hold protruding from the cover 2, 3 perpendicular from the bottom plane. In an alternative embodiment, the suspension shaft 20 may be fixedly mounted on the wheel suspension 10 while the respective cover 2, 3 is provided with a recess to engage with the suspension shaft 20 so that the wheel suspension 10 can freely rotate.

At a distal end (protruding end) of the wheel holder 11, one or two wheel shafts 12 protrude substantially perpendicularly to the suspension axis of the suspension shaft 20 thereby allowing a smooth rotation around the suspension shaft 20. The wheel shafts 12 serve as axles for respective wheels 13 to be attached thereon.

The wheel shafts 12 extend from the wheel holder 11 in opposing directions to reduce the torque onto the suspension shaft 20 at the proximal end of the suspension holder 11. Thereby, wheels can be attached on both sides of the suspension holder 11 sharing the load applied by the weight of the trolley case 1.

The wheels 13 may be made of plastic materials, such as polyurethane, PP and the like and have a hub opening 14 to receive the wheel shaft 12. As wheels 13 standard plastic or rubber wheels can be applied which are known from skates or skateboards. The wheels 13 can be applied in different colors so that each trolley can be customized to facilitate identification of the trolley.

Furthermore, the hub opening 14 is provided with coaxial recesses to accommodate bearings 15 which allow a smooth rotation around the wheel shaft 12. To fixate the wheel 13 onto the wheel shaft 12, a securing means may be provided such as a screw 16 or a locknut which can be fixated onto the protruding end of the wheel shaft 12 to prevent the wheel 13 from sliding from the wheel shaft 12. Furthermore, the securing means 16 is detachable so that when the securing means 16 is removed, the wheel 13 can removed from the wheel shaft 12 and thereby replaced.

Different kind of wheels 13 can be used. For example, instead of a wheel with separate bearings, a wheel with integrated bearings can be used.

The suspension holder 10 provides the advantage that it allows a facilitated replacement of the wheels 13 using standard wheels and allows a simple mounting onto the trolley case 1 in a rotatable manner.

As shown in Figure 1, a compartment may be provided in the interior of an encompassed chamber in which a spare wheel is accommodated, where the spare wheel is appropriate in shape and size to be attached to the one or two wheel shafts. This allows to replace the wheels when on travel without buying or ordering spare wheels.

## Claims

1. Trolley case (1) with a bottom plane at which a plurality of wheel suspensions (10) are mounted, wherein each wheel suspension comprises:
- a wheel holder (11) protruding from the bottom plane to the exterior, particularly in a substantially perpendicular direction;
- one or two wheel shafts (12) protruding from a distal end of the wheel holder (11) perpendicular with respect to the protrusion of the wheel holder (11),
wherein at least one wheel (13) is mounted on each wheel shaft (12) in a replaceable manner.

2. Trolley case (1) according to claim 1, wherein a securing means, particularly a securing screw (16) or a locknut, is provided to fixate the at least one wheel (13) onto the one or two wheel shafts (12) in a releasable manner.

3. Trolley case (1) according to claim 1 or 2, wherein a protruding end of each of the one or two wheel shafts (12) are provided with a thread to engage with a securing screw so that the wheel (13) is secured onto the respective wheel shaft (12).

4. Trolley case (1) according to any of the claims 1 to 3, wherein each wheel (13) is rotatably hold onto the respective wheel shaft (12) by means of a bearing.

5. Trolley case (1) according to claim 4, wherein the bearing is integrally formed with the wheel (13).

6. Trolley case (1) according to any of the claims, wherein the wheels (13) are made of rubber, plastics or metal.

7. Trolley case (1) according to any of the claims, wherein the wheel holder (11) is configured to rotate around a protrusions axle perpendicular to the bottom plane.

8. Trolley case (1) according to any of the claims, wherein a compartment is provided in the interior of an encompassed chamber in which a spare wheel is accommodated, where the spare wheel is appropriate in shape and size to be attached to the one or two wheel shafts (12).
